Europäisches Patentamt

(19) European Patent Office

Office européen des brevets

(11) Publication number: **0 087 022**
**A1**

(12) **EUROPEAN PATENT APPLICATION**

(21) Application number: 83100984.0

(22) Date of filing: 02.02.83

(51) Int. Cl.³: **A 61 C 5/04**
**A 61 C 5/10**

(30) Priority: 16.02.82 US 348864

(43) Date of publication of application:
31.08.83 Bulletin 83/35

(84) Designated Contracting States:
AT BE CH DE FR GB IT LI LU NL SE

(71) Applicant: DEN MAT, INC.
P.O. Box 1729
Santa Maria California 93456(US)

(72) Inventor: Ibsen, Robert Louis
1571 East Main Street
Santa Maria California 93454(US)

(72) Inventor: Reed, William Roy, Jr.
503 East Cox Lane
Santa Maria California 93454(US)

(74) Representative: Howden, Christopher Andrew
FORRESTER & BOEHMERT Widenmayerstrasse 4/1
D-8000 München 22(DE)

(54) A crown form.

(57) A crown form (20) for making surface repairs to damaged teeth using a restorative material comprises a recessed
form portion (30), that is shaped like an undamaged mold of
the damaged surface of a tooth being repaired and is
adpated to receive restorative material thereby enabling the
applying of restorative material to a tooth being repaired. A
flexible connection (40) joins a tab portion (35), which
provides a grasping surface for holding and fitting said
crown forms, to the form portion (30), the tab portion (35)
also being provided with identification means (50) thereon,
for identification of the shape and size of said crown form
(20).

FIG. 4

FIG. 7

Title:   A crown form

THIS INVENTION relates to a crown for making repairs to the surfaces of damaged teeth.

In the past, when attempting to shape a polymerizable restorative filling material to achieve the correct anatomical form of a tooth, a dentist's choices were limited to time-consuming procedures, involving an undue amount of time for shaping the restorative, for removing excess material, or for adding additional material because of an inadequate amount of fill.  The principal methods available, until the present invention, include the use of no matrix at all, the use of a matrix strip, or the use of a full crown form.  Each of these methods has some serious shortcomings, which will now be described.

The first method, that of using no matrix material at all, involves the freehand application of restorative material to a tooth.  In some instances a light-cured material is used.   Materials capable of self-curing in the presence of air have also been used.  This procedure requires careful shaping of the restorative material by the dentist, using a hard instrument.  The shaping process has to be performed within the limited time available between the time that the restorative material is placed on the tooth and the time at which polymerization begins, (usually in the order of two minutes).  On all but the smallest, most simple, restorations this method is very time-consuming, and could actually necessitate application of restorative material in layers in order to attain the desired depth of fill.  On the other hand, overfilling is also common when using this method, the resulting restoration requiring an undue amount of finishing time, mostly in removal of surplus (and now cured) material.

In order to overcome some of the shortcomings of the no-matrix method, a second method, involving the use of a matrix strip, was developed. A matrix strip is a thin, flexible strip made of metal or a plastics material. A typical size for a matrix stip is 0.001 inches (0.025mm) thick by 0.320 inches (8.10 mm) wide. In this method a matrix strip is cut to a desired length and inserted between the tooth being repaired and the teeth on either side of it. A restorative material is then applied to the tooth, and then the matrix wrapped around the restorative and held in position until the material is cured. This process requires the dentist or an assistant to stand with his hand in the patient's mouth, holding the matrix strip in place until the restorative material is cured. After curing, the matrix strip is removed and the tooth finished to its final shape. Typically restorations of this type are overfilled and a substantial amount of restorative "flash-material" exudes due to the pressure of the matrix strip. Again, much time is required in removal of the excess material when finishing the restoration.

The third method of shaping previously available to the dentist was the use of a full crown form. The full crown form is a tooth-shaped "female" mold, open at the root end of the tooth, constructed of a clear plastics material which does not bond to dental restorative. Full crown forms provide the best anatomical results of any of these three methods.

To use a full crown form the dentist prepares the tooth in the usual manner, by cleaning the tooth and preparing the surface to be bonded with a resin. The full crown form is then fitted to the tooth, trimming away excess material from the form, and rechecking the fit of the crown form on the tooth until a satisfactory match is made. This process ranges from a relatively simple procedure, when an extensive amount of tooth structure has been removed, to a tedious, complex affair when Class IV type (corner) or veneering type (lip surface) restorations are performed. Both Class IV and veneering restorations require a substantial amount of work for fitting of the full crown forms in order properly to accommodate the tooth. This represents an unnecessary investment in time and, consequently, expense often resulting in a compromised fit which yields a less-than-perfect restoration that might require either re-filling or excessive gross finishing. Following fitting, the form is filled with restorative and placed on the tooth to allow the restorative to cure.

The object of this invention is to at least mitigate the problems associated with these prior art methods.

In one aspect, the invention provides a crown form for making surface repairs to damaged teeth using a restorative material, comprising: a recessed form portion, shaped like an undamaged mold of the damaged surface of a tooth to be repaired, and adapted to receive restorative material for applying same to a tooth to be repaired; a tab portion, that provides a grasping surface for holding and fitting said crown form, and has identification means thereon for identifying, the shape and size of said crown form; and flexible connecting means connecting said tab portion to said recessed form portion.

A crown form of the present invention may be made as an integral unit, including a form portion connected to an identification tab portion by a bendable intermediate portion. The form portion may be made in a variety of sizes and shapes, both for labial and corner restorations. This variety of sizes and shapes is indicated by coded information provided on the tab portion, the tab portion also serving as a convenient handle for manipulating the crown form when placing it in a patient's mouth.

Preferably, said recessed form portion is made of a clear material, for transmitting light to enable the use of light-cured restorative materials and to enable visual inspection of the restorative material.

The crown forms of the invention are preferably constructed of cellulose acetate material, which does not react with or bond to dental restorative material, thereby facilitating easy removal of the crown form after curing of the restorative material. Alternatively, for veneering type restorations, a variety of other materials may be selected for their affinity for the restorative material.

Desirably, said tab portion comprises a series of offset alphanumeric characters on a surface elevated from said flexible connecting means.

In a further aspect, the invention provides a crown form for applying a tooth-shaped layer of restorative material to the surface of a damaged tooth, comprising: a form portion of clear material that is non-reactive with restorative material, adapted for holding restorative material in the shape of an undamaged tooth segment and having a first end for placement near the gums, a second end corresponding to the biting surface of the tooth being repaired, and a cover extending between said first end and said second end, having a shape corresponding to the undamaged outer surface of a tooth to be repaired; an identification and holding portion for identifying the size and shape of said crown form and for holding said crown form when applying said restorative material, and a flexible connecting portion for flexibly attaching one end of said identification and holding portion to said form portion at a point exterior to the biting surface of the tooth to be repaired.

These crown forms may be so constructed as to leave the labial surface of a repaired tooth with a finish resembling the natural tooth structure, with ripples and other anatomical irregularities.

So that the invention may be more readily understood, and so that further features thereof may be appreciated, embodiments of the invention will now be described, by way of example and with reference to the accompanying drawings, in which:

FIGURE 1 is a perspective view of a full crown form of the prior art;

FIGURE 2 is a perspective view of a labial crown form of the prior art;

FIGURE 3 is a perspective view of a corner crown form of the prior art;

FIGURE 4 is a front view of a labial crown form embodying the principles of the present invention;

FIGURE 5 is a rear view of the crown form of Figure 4;

FIGURE 6 is a side elevational view of the crown form of Figure 4, taken along the line 6-6 in Figure 4;

FIGURE 7 is a cross-sectional view in elevation of the crown form of Figure 4, taken along the line 7-7 in Figure 4;

FIGURE 8 is a cross-sectional view taken along the line 8-8 in Figure 4;

FIGURE 9 is a front view of a corner crown form embodying the principles of the invention;

FIGURE 10 is a rear view of the crown form of Figure 9;

FIGURE 11 is a side elevational view of the crown form of Figure 9, taken along the line 11-11 in Figure 9;

FIGURE 12 is a cross-sectional view in elevation of the same crown form of Figure 9, taken along the line 12-12 in Figure 9; and

FIGURE 13 is a cross-sectional view in elevation taken along the line 13-13 in Figure 9.

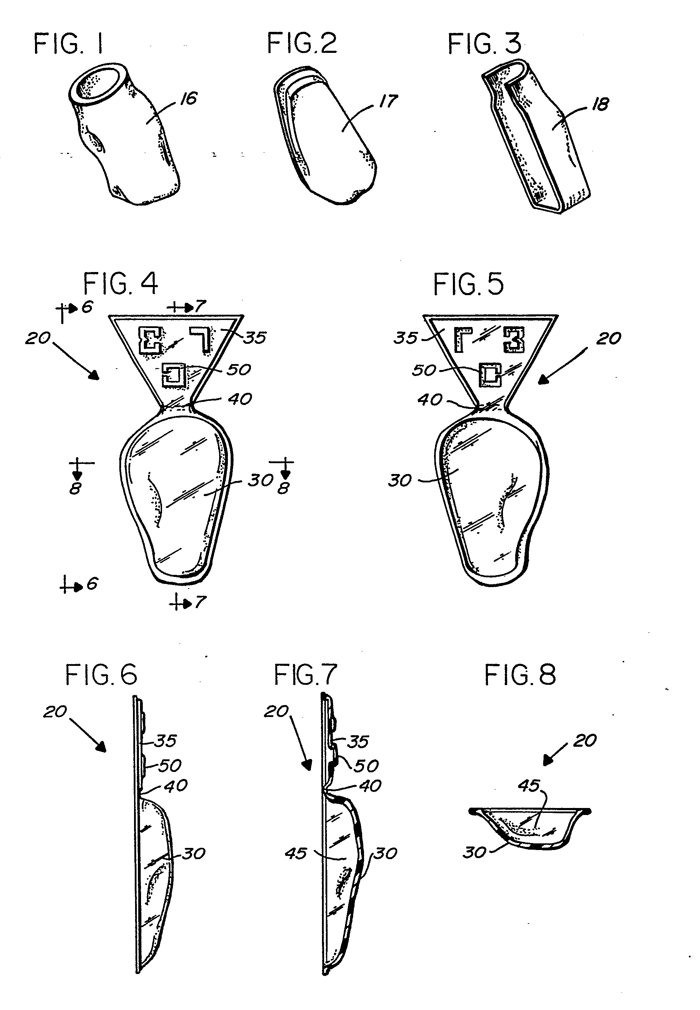

Before discussing embodiments of the present invention, the use of a full crown form will be discussed further, with reference to Figure 1 to 3 which illustrates this prior art system. Figure 1 shows a full crown form 16 which is slipped over the tooth to be repaired. The form 16 is then removed from the tooth and excess material is trimmed from the form 16. Each fitting and refitting continues until the match is satisfactory. With a prior corner crown form 17 (Figure 2) and with a prior art labrial crown form 18 (Figure 3), this process can be quite tedious.

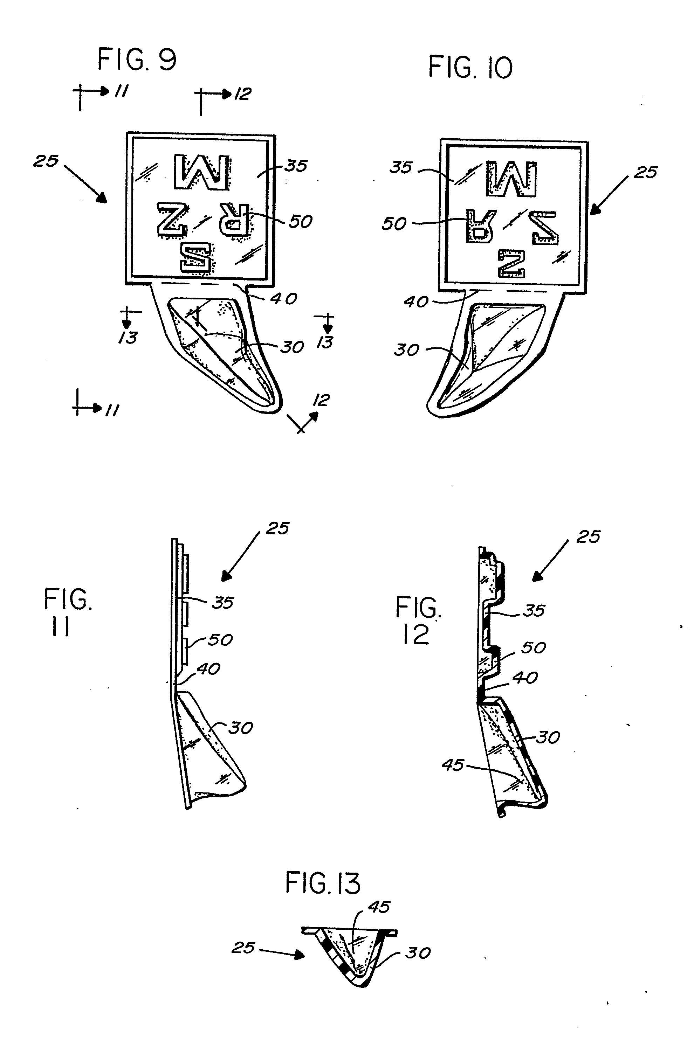

The crown forms of the present invention are so constructed that only that aspect of the tooth which is to be repaired is represented in the form. For example, Figure 4 illustrates a labrial crown form 20 in accordance with this invention that is used for repairing damage to the front surface of a tooth. Figure 9 illustrates a corner crown form 25 that is used for repairing chips at the corner of a tooth. The crown forms of the invention may be made in a variety of shapes and sizes, so that an accurate fit can be achieved on any tooth without need for trimming the form to achieve a desired fit.

For ease of description, like parts of the crown forms 20 and 25, as illustrated in Figures 4 to 8 and Figures 9 to 13 respectively, are referred to using the same numerals.

The crown forms of the invention are preferably molded as a single piece having two portions, a form portion 30 and a tab portion 35 that is integrally connected to the form portion 30 by a thin, pliable connecting member 40. As best illustrated in Figures 7 and 8 and Figures 12 and 13, the form portion 30 has a recess 45 in the shape of an undamaged portion of a tooth; this form portion is filled with restorative material immediately before the crown form is used.

The tab section 35 is provided with coded identification 50, so that the size and style of any particular crown form can be determined immediately by simply looking at it. Preferably, such coded information is in the form of a series of alphanumeric characters. The shape of the tab 35 may also be used as part of this identifying coded information, for example by making triangular tabs for labial crown forms 20 and rectangular tabs for corner crown forms 25.

The coding of crown forms 20, 25 is particularly useful to enable quick determination of which size and style of crown form is required for a repair job. For example, if the crown form being tried is just a little too small, a dentist can look at the coded identification 50 on the tab 35 and easily select the next size. Integral identification is also very useful for preventing dissimilar crown forms from becoming mixed in the same storage area.

The integral identiciation tabs 35 are so constructed as to provide a convenient handle to be used in placing the crown form 20, 25 in a patient's mouth. To facilitate this the tab portion 35 is molded to have some depth, like the form section 30, thereby giving the tab 35 a degree of independent structural rigidity.

The pliable connecting section 40 is both thin and flat, so that the tab 35 can be bent to almost any angle to the plane of the form portion 30, for ease in holding the tab 35 while placing the form over a tooth that is being ..repaired. The pliable connecting section 40 gives a great degree of flexibility for manipulating the crown form 20 or 25, while maintaining the identification tab 35 unitary with the form portion 30.

The crown forms of the present invention are preferably constructed of cellulose acetate, so that they will not react with or bond to dental restorative material. They may, therefore, be quickly and easily removed after the restoration has cured. Other materials, such as PET-G, PMMA, PEMA and polystyrene can be selected to enable a bond to be created between the restorative material and the crown form, for example if this is desired for veneer type restorations. The crown forms 20, 25 are preferably made of clear material, so that they may be used in conjunction with light-cured restorative products. Use of clear material also facilitates the determination of whether the form is completely filled with restorative material or whether there are, for example, air pockets. This enables the dentist to substantially reduce the chances of unsatisfactory results from incompletely filled crown forms.

A crown form in accordance with the present invention has been found to produce a restoration requiring a minimum of finishing work after the form is removed from the cured restorative material.

The crown forms of the invention have also been found to provide a crown form that requires no pre-fitting trimming procedure.

It has been found that such crown forms provide a crown form that leaves a minimum of excess restorative material remaining after cure is completed, and provide a full strippable crown form with integral identification.

Thus, the invention has been found to provide improved crown forms for properly and easily shaping and retaining restorative material on a tooth as the restorative material cures. The labial crown forms and corner forms of the present invention afford the dentist several distinct benefits which were previously unavailable.

CLAIMS:

1. A crown form for making surface repairs to damaged teeth using a restorative material, comprising: a recessed form portion, shaped like an undamaged mold of the damaged surface of a tooth to be repaired, and adapted to receive restorative material for applying same to a tooth to be repaired; a tab portion, that provides a grasping surface for holding and fitting said crown form, and has identification means thereon for identifying, the shape and size of said crown form; and flexible connecting means connecting said tab portion to said recessed form portion.

2. A crown form according to claim 1, wherein said recessed form portion is made of a clear material, for transmitting light to enable the use of light-cured restorative materials and to enable visual inspection of the restorative material.

3. A crown form according to claim 1 or 2, wherein said recessed form portion is made of cellulose acetate that does not react with or bond to restorative material.

4. A crown form according to any one of claims 1 to 3, wherein said tab portion comprises a series of offset alphanumeric characters on a surface elevated from said flexible connecting means.

5. A crown form according to any one of claims 1 to 4, wherein said flexible connecting means is connected to said recessed form portion at a point exterior of the tooth to be repaired.

6. A crown form for applying a tooth-shaped layer of restorative material to the surface of a damaged tooth, comprising: a form portion of clear material that is non-reactive with restorative material, adapted for holding restorative material in the shape of an undamaged tooth segment and having a first end for placement near the gums, a second end corresponding to the biting surface of the tooth being repaired, and a cover extending between said first end and said second end, having a shape corresponding to the undamaged outer surface of a tooth to be repaired; an identification and holding portion for identifying the size and shape of said crown form and for holding said crown form when applying said restorative material, and a flexible connecting portion for flexibly attaching one end of said identification and holding portion to said form portion at a point exterior to the biting surface of the tooth to be repaired.

7. Any novel feature or combination of features disclosed herein.

FIG. 1

FIG.2

FIG. 3

FIG. 4

FIG. 5

FIG.6

FIG.7

FIG.8

FIG. 9

FIG. 10

25

35

50

40

30

35

50

40

30

25

FIG. 11

25

35

50

40

30

FIG. 12

25

35

50

40

30

45

FIG. 13

45

25

30

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,A | US-A-4 129 946 (KENNEDY) <br> * Column 2, line 48 - column 3, line 32; figures 1, 7 * | 1-6 | A 61 C 5/04 <br> A 61 C 5/10 |
| A | CH-A- 626 247 (HAWE-NEOS DENTAL) <br> * Column 2, lines 15-22; figures 1-3 * | 1,2 | |
| A | DE-U-6 918 934 (HENLE) <br> * Page 4, lines 1-4; figures 1-3 * | 1 | |
| A | US-A-2 583 903 (TAYLOR) | | |
| A | US-A-1 410 311 (HOWE) | | TECHNICAL FIELDS SEARCHED (Int. Cl. ³) |
| A | US-A-4 305 707 (SHIMENKOV) | | A 61 C 5/00 |

The present search report has been drawn up for all claims

| Place of search | Date of completion of the search | Examiner |
|---|---|---|
| BERLIN | 09-05-1983 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82